# EUROPÄISCHE PATENTSCHRIFT

(11) **EP 4 101 274 B1**
(45) Veröffentlichungstag und Bekanntmachung des Hinweises auf die Patenterteilung: **27.08.2025**
(21) Anmeldenummer: 22401010.8
(22) Anmeldetag: 24.05.2022
(51) Int. Cl.: A01B 49/02, A01B 71/04, F16C 35/00, F16C 35/02, A01B 49/06

(54) **LANDWIRTSCHAFTLICHE ARBEITSMASCHINE**
AGRICULTURAL MACHINE
ENGIN DE TRAVAIL AGRICOLE

(30) Priorität: 01.06.2021 DE 102021114095
(43) Veröffentlichungstag der Anmeldung: 14.12.2022
(73) Patentinhaber: Amazonen-Werke H. Dreyer SE & Co. KG, 49205 Hasbergen (DE)
(72) Erfinder: Hempen, Henning, 26676 Harkebrügge (DE)

(56) Entgegenhaltungen:
- DE-A1- 102018 219 063
- DE-U1- 29 810 404
- FR-A1- 2 482 222
- GB-A- 2 306 581
- US-A1- 2007 201 780

## Beschreibung

Die Erfindung betrifft eine landwirtschaftliche Arbeitsmaschine gemäß dem Oberbegriff des Patentanspruches 1.

Auf dem Gebiet der Landwirtschaft sind eine Vielzahl von Varianten gezogener, angebauter und/oder selbstfahrender Arbeitsmaschinen bekannt. Hierzu zählen neben Sämaschinen, die dazu geeignet sind, Verteilgut, insbesondere Saatgut und/oder Dünger, auf der landwirtschaftlichen Nutzfläche auszubringen, unter anderem auch Bodenbearbeitungsgeräte mittels denen der Ackerboden derartiger Nutzflächen vor- und/oder nachbereitet werden kann. Darüber hinaus gehören hierzu auch Bestellkombinationen, bestehend aus einer Sämaschine und einem Bodenbearbeitungsgerät, welche dazu eingerichtet sind, die Verteilgutausbringung und die Ackerbodenbearbeitung zu kombinieren. Um das Verteilgut entsprechend auf der Nutzfläche auszubringen bzw. die Nutzfläche entsprechend zu bearbeiten, weisen derartige landwirtschaftliche Arbeitsmaschine wenigstens ein hierfür geeignetes Arbeitswergzeug auf, welches in geeigneter Weise mit einem Tragrahmen der Arbeitsmaschine gekoppelt ist.

Gattungsgemäße Arbeitswerkzeuge sind dabei je nach Stellung der Arbeitsmaschine, insbesondere zwischen einer Arbeits- und Transportstellung, und/oder je nach benötigter Arbeits- bzw. Eindringtiefe zumindest teilweise auf unterschiedlichen Höhen positionierbar und/oder verbringbar. Hierfür sind derartige Arbeitswerkzeuge, insbesondere in einer Mehrzahl quer zu einer Fahrtrichtung der Arbeitsmaschine gesehen, mittels wenigstens einem mit der Arbeitsmaschine gekoppelten, insbesondere gemeinsamen, Querbalken in der Höhe, Lage und/oder Ausrichtung verstellbar angeordnet.

Eine gattungsgemäße Arbeitsmaschine ist beispielsweise in der EP 3 649 841 A1 beschrieben. Die Arbeitsmaschine umfasst dabei zumindest einen der Arbeitsmaschine zugeordneten Tragrahmen mit wenigstens einer Aufnahme für wenigstens einen im Wesentlichen quer zu einer Fahrtrichtung der Arbeitsmaschine ausgerichteten Querbalken. Des Weiteren umfasst die Arbeitsmaschine wenigstens eine, insbesondere mehrteilige, Lagervorrichtung über die der Querbalken zumindest teilweise verdrehbar um seine Längsachse an der Aufnahme angeordnet ist. Die Lagervorrichtung und/oder der Querbalken sind in einem eingebauten Zustand umfangsseitig zumindest abschnittsweise einerseits von der Aufnahme und andererseits von wenigstens einem mit der Aufnahme verbundenen Überbrückungselement umschlossen.

Dokument DE29810404U1 offenbart eine Lagerung von Druckrollen, Walzen oder dergleichen.

Dokument US2007201780 offenbart Lagerbockbaugruppen für große rotierende rohrförmige Teile, wie z. B. Gelenkwellen für landwirtschaftliche Geräte.

Nachteilig bei derartig ausgeführten Arbeitsmaschinen sind die verhältnismäßig aufwendigen Montage- und/oder Umrüstprozesse des Querbalkens. Bei den bisherigen Arbeitsmaschinen sind bisher sowohl die Positionierung des Querbalkens als auch die, insbesondere gleichzeitige, Führung bzw. Handhabung von Hilfsmitteln in Form von Werkzeugen zum Verbinden notwendiger und/oder lösbarer Verbindungsmittel, die insbesondere nach Art von Schrauben ausgebildet sind, vom Bediener bzw. Nutzer zu übernehmen.

Die der Erfindung zugrunde liegende Aufgabe besteht somit darin, eine landwirtschaftliche Arbeitsmaschine so zu gestalten, dass der Querbalken in besonders einfacher und dabei betriebssicherer Weise mit der Arbeitsmaschine verbindbar ist.

Diese Aufgabe wird erfindungsgemäß dadurch gelöst, dass an der Aufnahme und am Überbrückungselement zumindest teilweise zueinander korrespondierende Verbindungsmittel vorgesehen sind, über die das wenigstens eine Überbrückungselement werkzeuglos, insbesondere formschlüssig, mit der Aufnahme, insbesondere zum Überbrücken und/oder Verschließen wenigstens einer an der Aufnahme ausgebildeten und/oder verschließbaren Montageöffnung, verbindbar ist.

In Folge dieser Maßnahme ist das Überbrückungselement zumindest im Wesentlichen ohne zusätzlich lösbare Verbindungsmittel reversibel und zerstörungsfrei mit der Aufnahme und damit dem Tragrahmen verbindbar oder verbunden. Diese Ausführungsform erlaubt auf der einen Seite eine besonders einfache Montage und/oder Demontage des Querbalkens und/oder der dazu zugeordneten Lagervorrichtung, die auf der anderen Seite gleichzeitig besonders betriebssicher ist. Die Handhabung des Überbrückungselements wird vorzugsweise dadurch noch weiter vereinfacht, in dem das Überbrückungselement einteilig ausgebildet ist. Besonders bevorzugt ist das Überbrückungselement hierbei nach Art eines Laser- und/oder Stanzteils ausgebildet, wobei eine Zerspanung aus Vollmaterial oder ein Gussteil ebenfalls denkbar sind. In einem demontierten Zustand ist das Überbrückungselement vorzugsweise vollständig von der Aufnahme und damit dem Tragrahmen gelöst. In einer alternativen oder zusätzlichen Ausführungsform kann das Überbrückungselement dauerhaft, insbesondere scharnierartig, am Tragrahmen angeordnet sein, wobei die Aufnahme, insbesondere die Montageöffnung, durch ein Zuschwenken und/oder Schließen des Überbrückungselements verschlossen wird. Sowohl das Lösen als auch das Anbringen des Überbrückungselements ist so erheblich vereinfacht. Auf diese Weise kann außerdem auch ein Umsetzen bzw. Umpositionieren des Querbalkens besonders schnell und einfach während eines Arbeitsvorgangs und/oder unmittelbar vor einem Arbeitsvorgang durchgeführt werden.

Unter dem Begriff "werkzeuglos" ist erfindungsgemäß ein Montage- und/oder Demontagevorgang zu verstehen, der zumindest in der Regel keine weiteren notwendigen Hilfsmittel, insbesondere Werkzeuge, für zusätzlich lösbare Verbindungsmittel zum Umsetzen der Verbindung erfordert. Gleichwohl können hierunter jedoch Montage- und/oder Demontagevorgänge verstanden werden, bei denen das Überbrückungselement selbst, mittels eines Hilfsmittels, beispielsweise in Form eines Schlag- und/oder Hebelwerkzeugs, zur Reduzierung des erforderlichen Kraftaufwands für einen Nutzer bzw. Bediener, in die Aufnahme einsetzbar und/oder von ihr lösbar ist. Die Verwendung eines solchen Hilfsmittels kann beispielsweise nach längerer Betriebsdauer und/oder wechselhafter Witterungen, insbesondere bei Verschleiß und/oder Verzug, des Überbrückungselements und/oder der Aufnahme erforderlich sein.

Der Querbalken ist vorzugsweise als, insbesondere von innen hohles, Profilrohr ausgebildet und zur Aufnahme von einer Mehrzahl landwirtschaftlicher Arbeitswerkzeuge und/oder Lagervorrichtungen geeignet. Die Außenform ist dabei besonders bevorzugt eckig, insbesondere vierkantförmig, ausgebildet, wobei alternativ auch zumindest teilweise runde, ovale und/oder polygonförmige Querschnitte denkbar sind.

In einer bevorzugten Ausführungsform der erfindungsgemäßen Arbeitsmaschine ist an der Aufnahme wenigstens eine verschließbare Montageöffnung ausgebildet, deren Form und/oder Abmessung zumindest im Wesentlichen der des Überbrückungselements entspricht, wobei vorzugsweise das Überbrückungselement puzzleartig in die Montageöffnung einsetzbar ist Die Verbindung zwischen Überbrückungselement und der Aufnahme ist hierbei vorzugsweise nach Art eine Spielpassung ausgebildet. Bei einer derartigen Ausführungsform ist der Kraftaufwand zum Einsetzen oder Lösen des Überbrückungselements für einen Nutzer bzw. Bediener vergleichsweise besonders gering. Ferner ist sowohl die Aufnahme als auch das Überbrückungselement bevorzugt aus dem gleichen, insbesondere metallischen, Material ausgebildet, womit eine besonders hohe Stabilität der Verbindung erreicht ist.

In einer Weiterbildung der erfindungsgemäßen Arbeitsmaschine ist ein durch die Montageöffnung unterbrochener innerer Umfang der Aufnahme in Umfangsrichtung gesehen zumindest nahezu übergangsfrei, insbesondere nahtlos, mittels des Überbrückungselements verschlossen. Das Überbrückungselement ist dabei derart an der Aufnahme angeordnet, dass sowohl die Aufnahme, als auch das Überbrückungselement, die Lagervorrichtung und damit den Querbalken tragende Abschnitte entlang des inneren Umfangs aufweist. Der innere Umfang wird dabei von der Aufnahme und dem Überbrückungselement gebildet und ist bevorzugt zumindest abschnittsweise, insbesondere zumindest im Wesentlichen, Kreisabschnittsförmig und/oder zylindrisch ausgeführt. Der von der Aufnahme und dem Überbrückungselement gebildete innere Umfang ist besonders bevorzugt kreisförmig und/oder zylindrisch ausgebildet. Das Überbrückungselement bildet hierbei eine zusätzliche Lagerfläche für die wenigstens eine Lagervorrichtung des Querbalkens. Kräfte, insbesondere in Form von Anpresskräften, und/oder Materialspannungen sind so über zumindest nahezu den gesamten Umfang der Lagervorrichtung und/oder der Aufnahme übertragbar und/oder verteilbar. Mit einer derartigen Ausführungsform ist eine besonders betriebssichere Variante der Verbindung zwischen dem Querbalken und dem Tragrahmen und damit der Arbeitsmaschine erreicht.

In einer anderen bevorzugten Ausführungsform der erfindungsgemäßen Arbeitsmaschine ist wenigstens ein an der Aufnahme und/oder dem Überbrückungselement ausgebildetes erstes Verbindungsmittel als ein Halteausschnitt und wenigstens ein dazu korrespondierendes an der Aufnahme und/oder dem Überbrückungselement ausgebildetes zweites Verbindungsmittel als ein, insbesondere bolzen- und/oder zapfenartiger, Einsetzfortsatz ausgeführt. Das Überbrückungselement und die Aufnahme weisen vorzugsweise jeweils mehrere erste und/oder zweite Verbindungsmittel auf, wobei für jedes erstes Verbindungsmittel ein dazu korrespondierendes zweites Verbindungsmittel ausgebildet ist. Besonders bevorzugt ist der Einsetzfortsatz angeformt und/oder Hakenförmig, insbesondere nach Art eines T-, L- und/oder anders -förmigen hintergreifenden Elements, ausgebildet. Alternativ oder zusätzlich kann der Einsetzfortsatz auch zumindest teilweise abgerundet, insbesondere kreis- und/oder ovalabschnittsförmig, ausgebildet sein. Der Halteausschnitt ist besonders bevorzugt in der Form und/oder den Abmessungen zumindest teilweise korrespondierend zum Einsetzfortsatz ausgebildet, so dass der Einsetzfortsatz im eingebauten und/oder verbundenen Zustand zumindest nahezu vollständig vom Halteausschnitt umschlossen ist. In einer bevorzugten Ausführungsform ist das zumindest eine erste Verbindungsmittel an der Aufnahme und das zumindest eine dazu korrespondierende zweite Verbindungsmittel am Überbrückungselement ausgebildet. Diese Ausführungsform erlaubt ein besonders schnelles und/oder einfaches Montieren und/oder Demontieren des Überbrückungselements und damit des Querbalkens.

In einer anderen Weiterbildung der erfindungsgemäßen Arbeitsmaschine ist das Überbrückungselement zumindest teilweise in die Lagervorrichtung ragend an der Aufnahme angeordnet, wobei die Lagervorrichtung vorzugsweise dazu eingerichtet ist, das Überbrückungselement zumindest teilweise, insbesondere verschiebungssicher, in Längsrichtung des Querbalkens zu halten. Das Überbrückungselement ist damit in besonders einfacher Weise in axialer Richtung bzw. in Längsrichtung des Querbalkens gesehen zumindest nahezu sitzfest an der Aufnahme angeordnet. Die Lagervorrichtung umfasst hierzu bevorzugt wenigstens einen seitlich an der Aufnahme und/oder dem Tragrahmen angeordneten Lagerkörper, der insbesondere form- und/oder kraftschlüssig beispielsweise mittels Schraubmitteln, mit der Aufnahme und/oder alternativ oder zusätzlich mit einem gegenüberliegenden weiteren Lagerkörper verbunden ist, wobei das Überbrückungselement in axialer- bzw. in Längsrichtung gesehen zwischen dem Lagerkörper und der Aufnahme und/oder dem zumindest einem weiteren gegenüberliegenden Lagerkörper angeordnet und/oder eingeklemmt ist.

Weitere Einzelheiten der Erfindung sind der Beispielsbeschreibung und den Zeichnungen zu entnehmen. Die Zeichnungen zeigen
- Fig.1: eine als Sämaschine ausgebildete landwirtschaftliche Arbeitsmaschine in einer zumindest teilweise angehobenen Transportstellung und in perspektivischer Ansicht von hinten;
- Fig.2: eine erfindungsgemäße Verbindung zwischen einer Aufnahme der Arbeitsmaschine und einem eingebauten Querbalken in vergrößerter Teilansicht;
- Fig.3: die Aufnahme aus Fig.2 und ein verbautes erfindungsgemäßes Überbrückungselement bei demontiertem Querbalken; und
- Fig.4: die Aufnahme und das erfindungsgemäße Überbrückungselement aus Fig.3 in einem voneinander gelösten Zustand.

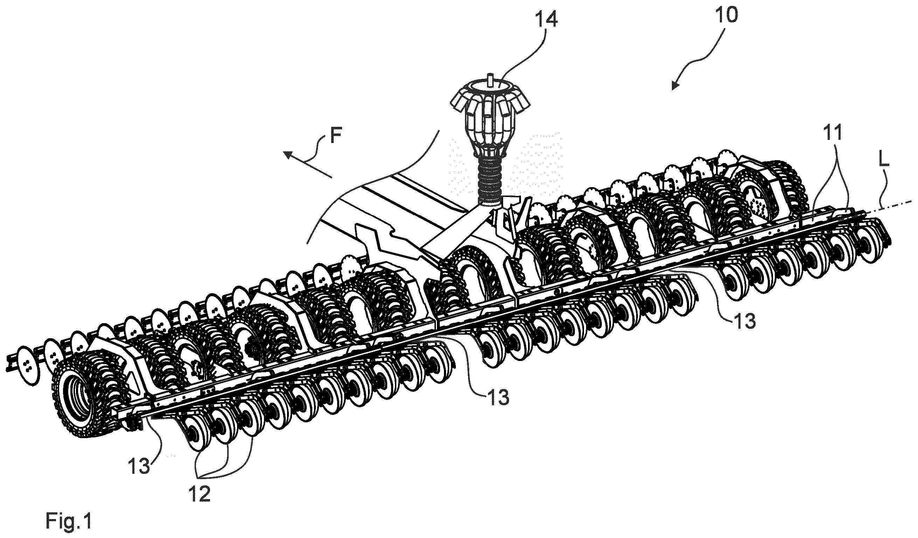

Ein Ausschnitt einer beispielhaft als Sämaschine ausgebildeten landwirtschaftlichen Arbeitsmaschine 10 ist in der Fig.1 gezeigt. Die Arbeitsmaschine 10 umfasst hierbei zumindest einen in den Figuren nicht gezeigten Vorratsbehälter zum Vorhalten von Verteilgut, das über wenigstens ein ebenfalls nicht gezeigtes pneumatisches Fördersystem zu wenigstens einer, insbesondere nach Art eines Verteilerkopfs, ausgebildeten Verteileinheit 14 zubringbar ist. Ausgehend von der Verteileinheit 14 ist das Verteilgut über nicht gezeigte Förderleitungen zu mehreren quer zu einer Fahrtrichtung F angeordneter Scharanordnungen, welche jeweils wenigstens ein, insbesondere als Scheibenschar ausgebildetes, Arbeitswerkzeug 12 umfassen, förderbar. Alternativ oder zusätzlich zur gezeigten Ausführungsform kann das Arbeitswerkzeug 12 auch zumindest teilweise als Rolle, Walze und/oder Zinken ausgebildet sein.

Es versteht sich, dass die beschriebene Arbeitsmaschine alternativ oder zusätzlich auch als gezogene, angebaute und/oder selbstfahrende landwirtschaftliche Verteilmaschine, Bodenbearbeitungsmaschine und/oder Bestellkombination ausgebildet sein kann.

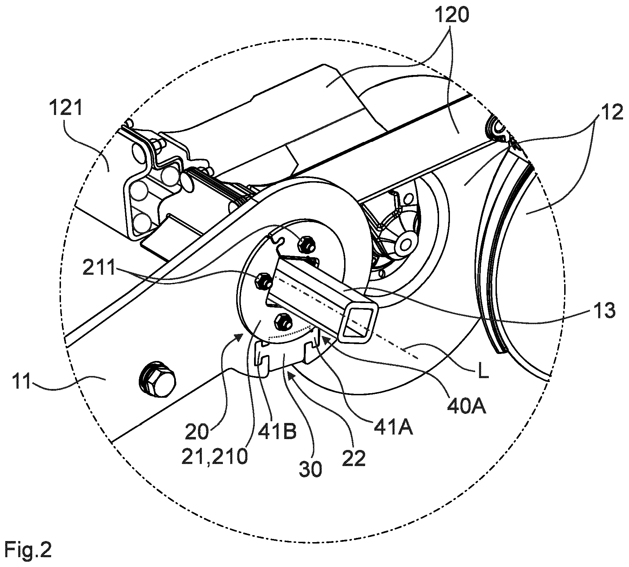

Die gezeigten Scharanordnungen, insbesondere die Arbeitswerkzeuge 12, sind über zumindest im Wesentlichen quer zur Fahrtrichtung F ausgerichtete Querbalken 13 mit wenigstens einer Aufnahme 20 eines der Arbeitsmaschine 10 zugeordneten Tragrahmens 11 gekoppelt. Die jeweiligen Querbalken 13 sind in diesem Ausführungsbeispiel jeweils über mehrere, insbesondere seitlich gegenüberliegende, Aufnahmen 20 mit der Arbeitsmaschine verbunden. Wie in der Fig.2 weiterhin zu sehen ist, ist jede Scharanordnung, insbesondere jedes Arbeitswerkzeug 12, beispielhaft mittels eines Tragarms 120 und einer dazu zugeordneten Überlastsicherung 121 mit dem Querbalken 13 verbunden.

Die Arbeitsmaschine 10 umfasst ferner eine, insbesondere an und/oder innerhalb der Aufnahme 20 des Tragrahmens 11 und am Querbalken 13 angeordnete, Lagervorrichtung 21, über die der Querbalken 13 zumindest teilweise verdrehbar um seine Längsachse L an der Aufnahme 20 und damit am Tragrahmen 11 gelagert ist. Die Lagervorrichtung 21 ist beispielhaft mehrteilig ausgeführt, wobei alternativ oder zusätzlich auch eine einteilige Ausführungsform der Lagervorrichtung 21 denkbar ist. Der Querbalken 13 ist hierbei mit einer in den Figuren nicht gezeigten Stellvorrichtung gekoppelt, die dazu eingerichtet ist, den Querbalken 13, insbesondere fernbetätigt, um seine Längsachse L zu verdrehen und damit die Arbeitswerkzeuge 12 zu verschwenken und/oder zu verstellen. Darüber hinaus wird der Querbalken 13 zu Montage- und/oder Demontagezwecken bei demontierter und/oder gelöster Lagervorrichtung 21 über eine an der Aufnahme 20 ausgebildete Montageöffnung 22 durchgeführt.

Im gezeigten eingebauten Zustand in Fig. 2 ist die Lagervorrichtung 21 und/oder der Querbalken 13 umfangsseitig zumindest abschnittsweise einerseits von der Aufnahme 20 und andererseits von wenigstens einem mit der Aufnahme 20 verbundenen Überbrückungselement 30 umschlossen. Das Überbrückungselement 30 ist hierbei dazu eingerichtet, in die Montageöffnung 22 eingesetzt zu werden und somit die Montageöffnung 22 zumindest teilweise, insbesondere nahezu vollständig, zu verschließen und/oder zu überbrücken.

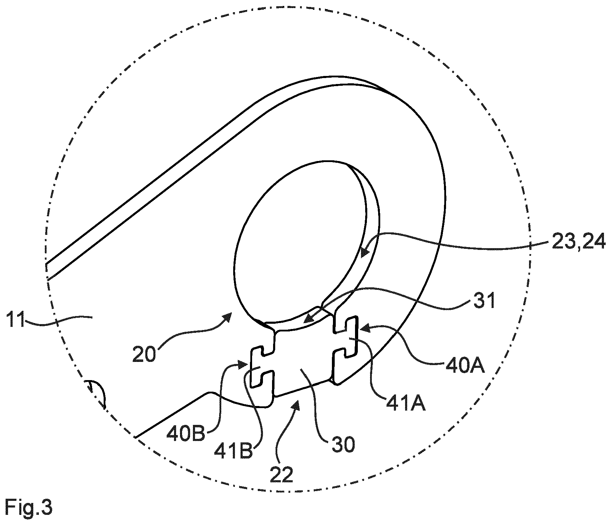

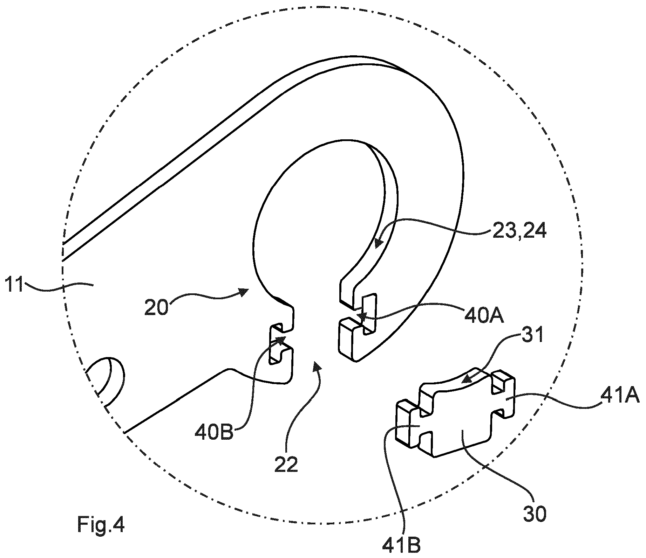

Das Überbrückungselement 30 und die Montageöffnung 22 sind in der Fig.3 und Fig.4 besonders gut zu sehen, wobei das Überbrückungselement 30 in der Fig.3 mit der Aufnahme 20 verbunden und in der Fig.4 von der Aufnahme 20 gelöst ist. Es ist zu erkennen, dass die Form und/oder Abmessungen der verschließbaren Montageöffnung 22 zumindest im Wesentlichen der Form und/oder den Abmessungen des Überbrückungselements 30 entsprechen. Das Überbrückungselement 30 ist somit dazu eingerichtet, einen durch die Montageöffnung 22 unterbrochenen inneren Umfang 23 der Aufnahme 20 in Umfangsrichtung gesehen zumindest nahezu übergangsfrei zu verschließen. Im eingebauten Zustand wird die Lagervorrichtung 21 somit sowohl von wenigstens einem ersten Abschnitt 24 der Aufnahme 20 als auch wenigstens einem zweiten Abschnitt 31 des Überbrückungselements 30 getragen. Der zweite Abschnitt 31 des Überbrückungselements 30 bildet somit eine zur Aufnahme 20 zusätzliche Lagerfläche, die dazu eingerichtet ist, Kräfte, insbesondere in Form von Lager- und/oder Anpresskräften, zu übertragen.

Zu vereinfachten Montagezwecken sind an der Aufnahme 20 und am Überbrückungselement 30 weiterhin zumindest teilweise zueinander korrespondierende Verbindungsmittel 40A-41B vorgesehen, mittels denen das wenigstens eine Überbrückungselement 30 werkzeuglos, insbesondere formschlüssig, mit der Aufnahme 20 verbindbar ist.

An der Aufnahme 20 ausgebildete erste Verbindungsmittel 40A, 40B sind hierbei beispielhaft als Halteausschnitte ausgebildet und insbesondere unmittelbar entlang der Montageöffnung 22 angeordnet. An dem Überbrückungselement 30 ausgebildete zweite Verbindungsmittel 41A, 41B, die insbesondere jeweils zu einem jeweiligen ersten Verbindungsmittel 40A, 40B zugeordnet sind, sind jeweils als ein bolzen- und/oder zapfenartiger Einsetzfortsatz ausgeführt.

Die Verbindungsmittel 40A-41B sind in diesem Ausführungsbeispiel T-förmig ausgebildet, wobei die zweiten Verbindungsmittel 41A, 41B dazu eingerichtet sind, die ersten Verbindungsmittel 40A, 40B im verbundenen Zustand zu hintergreifen, so dass die zweiten Verbindungsmittel 41A, 41B von den jeweiligen zugeordneten ersten Verbindungsmittel 40A, 40B zumindest teilweise umschlossen werden. Die Verbindungsmittel 40A-41B können alternativ oder zusätzlich auch andere, insbesondere ineinander greifende, Formen aufweisen. Die Verbindungsmittel 40A-41B können alternativ oder zusätzlich auch zumindest teilweise L- und/oder ovalförmig ausgebildet sein.

Es ist weiterhin vorgesehen, dass das Überbrückungselement 30 hierbei puzzleartig in die Montageöffnung einsetzbar ist. Das Überbrückungselement 30 wird zur Montage bzw. Demontage in einer zumindest im Wesentlichen zur Längsachse L des Querbalkens 13 korrespondierenden Richtung in die Montageöffnung ein- bzw. herausgeschoben. Eine noch weiter vereinfachte Handhabung für einen Bediener wird dadurch erreicht, dass die zweiten Verbindungsmittel 41A, 41B angeformt sind und/oder das Überbrückungselement 30 einteilig ausgebildet ist.

Alternativ oder zusätzlich zur gezeigten Ausführungsform können auch wenigstens ein erstes oder alle ersten Verbindungsmittel 40A, 40B am Überbrückungselement 30 ausgebildet und/oder ein zweites oder alle zweiten Verbindungsmittel 41A, 41B an der Aufnahme 20 angeordnet sein. Ferner kann das Überbrückungselement 30 alternativ oder zusätzlich auch zumindest abschnittsweise dauerhaft, insbesondere scharnierartig, mit der Aufnahme 20 verbunden sein und zum Verschließen und/oder Öffnen der Montageöffnung 22 wenigstens ein Verbindungsmittel 40A-41B aufweisen.

Im verbauten Zustand des Querbalkens 13 wird das Überbrückungselement 30 in axialer Richtung bzw. in Längsrichtung des Querbalkens 13 durch die Lagervorrichtung 21 gehalten. Das Überbrückungselement 30 ist hierbei zumindest teilweise in die Lagervorrichtung 21 ragend an der Aufnahme 20 angeordnet, wie in der Fig.2 zu sehen ist. Die Lagervorrichtung 21 umfasst hierzu wenigstens einen seitlich an der Aufnahme 20 angeordneten ersten Lagerkörper 210, der insbesondere zumindest teilweise scheibenförmig ausgebildet und mittels Schraubmitteln 211 mit der Aufnahme 20 und/oder dem Tragrahmen 11 verbunden ist. Alternativ oder zusätzlich hierzu kann die Lagervorrichtung 21 zumindest einen weiteren zum ersten Lagerkörper 21 gegenüberliegend an der Aufnahme 20 angeordneten zweiten Lagerkörper umfassen, der mittels Schraubmitteln 211 mit der Aufnahme 20 und/oder dem ersten Lagerkörper 21 verbunden ist. Die Lagervorrichtung 21 und/oder der wenigstens eine Lagerkörper 210 kann alternativ oder zusätzlich nach Art einer Klemmverbindung mit dem Tragrahmen 11 oder dem Querbalken 13 verbunden sein. Die gezeigten Schraubmittel 211 sind hierbei ebenso beispielhaft und können alternativ durch eine form- und/oder stoffschlüssige Verbindung, insbesondere am Lagerkörper 210, ergänzt und/oder ersetzt werden.

### Bezugszeichenliste

- 10: landwirtschaftliche Arbeitsmaschine
- 11: Tragrahmen
- 12: Arbeitswerkzeug
- 120: Tragarm
- 121: Überlastsicherung
- 13: Querbalken
- 14: Verteileinheit
- 20: Aufnahme
- 21: Lagervorrichtung
- 210: Lagerkörper
- 211: Schraubmittel
- 22: Montageöffnung
- 23: innerer Umfang
- 24: tragender Abschnitt der Aufnahme
- 30: Überbrückungselement
- 31: tragende Abschnitte des Überbrückungselements
- 40A, 40B: erstes Verbindungsmittel
- 41A, 41B: zweites Verbindungsmittel

- F: Fahrtrichtung
- L: Längsachse des Querbalkens

## Patentansprüche

1. Landwirtschaftliche Arbeitsmaschine (10), insbesondere Sä- und/oder Bodenbearbeitungsmaschine, umfassend
- zumindest einen der Arbeitsmaschine (10) zugeordneten Tragrahmen (11) mit wenigstens einer Aufnahme (20) für wenigstens einen im Wesentlichen quer zu einer Fahrtrichtung (F) der Arbeitsmaschine (10) ausgerichteten Querbalken (13),
- sowie zumindest eine Lagervorrichtung (21) über die der Querbalken (13) zumindest teilweise verdrehbar um seine Längsachse (L) an der Aufnahme (20) angeordnet ist,
wobei die Lagervorrichtung (21) und/oder der Querbalken (13) in einem eingebauten Zustand umfangsseitig zumindest abschnittsweise einerseits von der Aufnahme (20) und andererseits von wenigstens einem mit der Aufnahme (20) verbindbaren Überbrückungselement (30) umschlossen sind, und wobei an der Aufnahme (20) und am Überbrückungselement (30) zumindest teilweise zueinander korrespondierende Verbindungsmittel (40A-41B) vorgesehen sind, über die das wenigstens eine Überbrückungselement (30) werkzeuglos, insbesondere formschlüssig, mit der Aufnahme (20), insbesondere zum Überbrücken und/oder Verschließen wenigstens einer an der Aufnahme (20) ausgebildeten und/oder verschließbaren Montageöffnung (22), verbindbar ist, das Überbrückungselement (30) zumindest teilweise in die Lagervorrichtung (21) ragend an der Aufnahme (20) angeordnet ist, wobei die Lagervorrichtung (21) vorzugsweise dazu eingerichtet ist, das Überbrückungselement (30) zumindest teilweise, insbesondere verschiebungssicher, in Längsrichtung des Querbalkens (13) zu halten, und wobei die Lagervorrichtung (21) wenigstens einen seitlich an der Aufnahme (20) und/oder dem Tragrahmen (120) angeordneten Lagerkörper (210) umfasst, der, insbesondere form- und/oder kraftschlüssig, mit der Aufnahme (20) und/oder mit einem gegenüberliegenden weiteren Lagerkörper (210) verbunden ist, wobei das Überbrückungselement (30) in axialer- bzw. in Längsrichtung gesehen zwischen dem Lagerkörper (210) und der Aufnahme (20) und/oder dem zumindest einem weiteren gegenüberliegenden Lagerkörper (210) angeordnet und/oder eingeklemmt ist.

2. Arbeitsmaschine (10) nach Anspruch 1, **dadurch gekennzeichnet, dass** an der Aufnahme (20) wenigstens eine verschließbare Montageöffnung (22) ausgebildet ist, deren Form und/oder Abmessung zumindest im Wesentlichen der des Überbrückungselements (30) entspricht, wobei vorzugsweise das Überbrückungselement (30) puzzleartig in die Montageöffnung (22) einsetzbar ist.

3. Arbeitsmaschine (10) nach Anspruch 2, **dadurch gekennzeichnet, dass** ein durch die Montageöffnung (22) unterbrochener innerer Umfang (23) der Aufnahme (20) in Umfangsrichtung gesehen zumindest nahezu übergangsfrei, insbesondere nahtlos, mittels des Überbrückungselements (30) verschlossen ist.

4. Arbeitsmaschine (10) nach zumindest einem der vorgenannten Ansprüche 1 bis 3, **dadurch gekennzeichnet, dass** wenigstens ein an der Aufnahme (20) und/oder dem Überbrückungselement (30) ausgebildetes erstes Verbindungsmittel (40A, 40B) als ein Halteausschnitt und wenigstens ein dazu korrespondierendes an der Aufnahme (20) und/oder dem Überbrückungselement (30) ausgebildetes zweites Verbindungsmittel (41A, 41B) als ein, insbesondere bolzen- und/oder zapfenartiger, Einsetzfortsatz ausgeführt ist.

## Claims

1. Agricultural work machine (10), in particular sowing and/or soil-cultivating machine, comprising
- at least one support frame (11) assigned to the work machine (10) having at least one receptacle (20) for at least one crossbeam (13) aligned substantially transversely to a direction of travel (F) of the work machine (10),
- and at least one bearing device (21) via which the crossbeam (13) is arranged on the receptacle (20) so as to be at least partially rotatable about its longitudinal axis (L),
wherein the bearing device (21) and/or the crossbeam (13) are, in an installed state, peripherally enclosed at least in portions on one side by the receptacle (20) and on the other side by at least one bridging element (30) connectable to the receptacle (20), and wherein connecting means (40A-41B) corresponding at least in part to one another are provided on the receptacle (20) and on the bridging element (30), via which connecting means the at least one bridging element (30) can be connected to the receptacle (20) without tools, in particular in a form-fitting manner, in particular for bridging and/or closing at least one mounting opening (22) formed and/or closable on the receptacle (20), the bridging element (30) is arranged on the receptacle (20) so as to protrude at least in part into the bearing device (21), wherein the bearing device (21) is preferably designed to retain the bridging element (30) at least in part, in particular in a displacement-proof manner, in the longitudinal direction of the crossbeam (13), and wherein the bearing device (21) comprises at least one bearing body (210) arranged laterally on the receptacle (20) and/or the support frame (120), which is connected, in particular in a form-fitting and/or force-fitting manner, to the receptacle (20) and/or to an opposite further bearing body (210), wherein the bridging element (30) is arranged and/or clamped in the axial or longitudinal direction between the bearing body (210) and the receptacle (20) and/or the at least one further opposite bearing body (210).

2. Work machine (10) according to claim 1, **characterized in that** at least one closable mounting opening (22) is formed on the receptacle (20), the shape and/or dimensions of which correspond at least substantially to that of the bridging element (30), the bridging element (30) preferably being insertable into the mounting opening (22) in a puzzle-like manner.

3. Work machine (10) according to claim 2, **characterized in that** an inner circumference (23) of the receptacle (20) interrupted by the mounting opening (22) is closed at least almost without transitions, in particular seamlessly, by means of the bridging element (30) in the circumferential direction.

4. Work machine (10) according to at least one of the preceding claims 1 to 3, **characterized in that** at least one first connecting means (40A, 40B) formed on the receptacle (20) and/or the bridging element (30) is designed as a retaining cutout and at least one corresponding second connecting means (41A, 41B) formed on the receptacle (20) and/or the bridging element (30) is designed as an in particular a bolt-like and/or pin-like insertion extension.

## Revendications

1. Machine de travail (10) agricole, en particulier semoir et/ou machine pour le travail du sol, comprenant
- au moins un cadre porteur (11) associé à la machine de travail (10) et comportant au moins un logement (20) pour au moins une barre transversale (13) orientée essentiellement transversalement à une direction de déplacement (F) de la machine de travail (10),
- ainsi qu'au moins un dispositif de palier (21) par l'intermédiaire duquel la barre transversale (13) est disposée sur le logement (20) de manière à pouvoir tourner au moins partiellement autour de son axe longitudinal (L),
dans laquelle le dispositif de palier (21) et/ou la barre transversale (13) sont, à l'état monté, entourés sur leur périphérie, au moins dans certaines sections, d'une part par le logement (20) et d'autre part par au moins un élément de pontage (30) pouvant être relié au logement (20), et dans laquelle des moyens de liaison (40A-41B) correspondant au moins partiellement les uns aux autres sont prévus sur le logement (20) et sur l'élément de pontage (30), moyens de liaison par l'intermédiaire desquels l'au moins un élément de pontage (30) est relié sans outil, en particulier par complémentarité de forme, au logement (20), en particulier pour ponter et/ou fermer au moins une ouverture de montage (22) formée et/ou pouvant être fermée sur le logement (20), l'élément de pontage (30) est disposé sur le logement (20) en faisant saillie au moins partiellement dans le dispositif de palier (21), dans laquelle le dispositif de palier (21) est de préférence conçu pour maintenir l'élément de pontage (30) au moins partiellement, en particulier sans possibilité de déplacement, dans la direction longitudinale de la barre transversale (13), et dans laquelle le dispositif de palier (21) comprend au moins un corps de palier (210) disposé latéralement sur le logement (20) et/ou le cadre porteur (120), lequel corps de palier est relié, en particulier par complémentarité de forme et/ou à force, au logement (20) et/ou à un autre corps de palier (210) opposé, dans laquelle l'élément de pontage (30) est disposé et/ou serré, vu dans la direction axiale ou longitudinale, entre le corps de palier (210) et le logement (20) et/ou l'au moins un autre corps de palier (210) opposé.

2. Machine de travail (10) selon la revendication 1, **caractérisée en ce qu'**au moins une ouverture de montage (22) pouvant être fermée est formée sur le logement (20), ouverture de montage dont la forme et/ou les dimensions correspondent au moins sensiblement à celles de l'élément de pontage (30), dans laquelle l'élément de pontage (30) peut de préférence être inséré à la manière d'un puzzle dans l'ouverture de montage (22).

3. Machine de travail (10) selon la revendication 2, **caractérisée en ce qu'**une périphérie intérieure (23), interrompue par l'ouverture de montage (22), du logement (20) est fermée, vue dans la direction périphérique, au moins presque sans transition, en particulier sans soudure, par le biais de l'élément de pontage (30).

4. Machine de travail (10) selon au moins l'une des revendications 1 à 3 précédentes, **caractérisée en ce qu'**au moins un premier moyen de liaison (40A, 40B) formé sur le logement (20) et/ou l'élément de pontage (30) est réalisé sous la forme d'une découpe de retenue et au moins un second moyen de liaison (41A, 41B) lui correspondant formé sur le logement (20) et/ou l'élément de pontage (30) est réalisé sous la forme d'un prolongement d'insertion, en particulier en forme de boulon et/ou de tenon.
